# EUROPÄISCHE PATENTSCHRIFT

(11) **EP 0 822 424 B1**
(45) Veröffentlichungstag und Bekanntmachung des Hinweises auf die Patenterteilung: **07.08.2002**
(21) Anmeldenummer: 97108451.2
(22) Anmeldetag: 26.05.1997
(51) Int. Cl.: G02B 6/12, G02B 6/125, G02B 6/28

(54) **Optischer Verzweiger**
Optical branching element
Dispositif de branchement optique

(30) Priorität: 30.07.1996 DE 19630706
(43) Veröffentlichungstag der Anmeldung: 04.02.1998
(73) Patentinhaber: Deutsche Telekom AG, 53113 Bonn (DE)
(72) Erfinder: Werner, Frank, Prof. Dr., 64287 Darmstadt (DE); Stelmaszyk, Angelika, 64823 Gross Umstadt (DE); Strack, Hans, Prof. Dr., 64380 Rossdorf (DE)

(56) Entgegenhaltungen:
- EP-A- 0 412 675
- DE-A- 4 217 526
- US-A- 4 652 076
- US-A- 4 756 587
- PATENT ABSTRACTS OF JAPAN vol. 015, no. 420 (P-1267), 24. Oktober 1991 & JP 03 172804 A (NIPPON SHEET GLASS CO LTD), 26. Juli 1991
- PATENT ABSTRACTS OF JAPAN vol. 096, no. 008, 30. August 1996 & JP 08 086926 A (NHK SPRING CO LTD), 2. April 1996

## Beschreibung

Die Erfindung betrifft einen optischen Verzweiger gemäß dem Oberbegriff des Anspruchs 1, der in einem transparenten, strukturierbaren Material, insbesondere in einem Polymer, hergestellt ist.

Eine wichtige Komponente für die optische Nachrichtenübertragung ist der Mehrfach-Verzweiger. Dieser dient beispielsweise dazu, optische Informationen auf mehrere Empfänger zu verteilen. Grundsätzlich unterscheidet man zwischen passiven und aktiven optischen Verzweigern. Als passive optische Verzweiger sind bislang sogenannte Y-Verzweiger und Richtkoppler bekannt. Mehrfach-Verzweiger wurden durch Kaskadierung von derartigen Y-Verzweigern oder Richtkopplern hergestellt. Ein solcher Mehrfach-Verzweiger ist unter anderem von M. Zirngibl in dem Aufsatz "Efficient 1x16 optical power splitter based on InP, Electronic Letters, Band 28 (13), Seiten 1212-1213, 1992, und von H. Takahashi in dem Aufsatz "Design and fabrication of silica-based integrated-optics 1x128 power splitter, Electronic Letters, Band 27 (23), Seiten 2131-2133, 1991, beschrieben. Die darin beschriebenen Mehrfach-Verzweiger sind aber allesamt aus Halbleitermaterialien hergestellt. Ein wesentlicher Nachteil von Mehrfach-Verzweigern, die aus einer Kaskadierung von Y-Verzweigern hergestellt werden, liegt darin, daß sie bei hohen Verzweigungsraten eine Länge von einigen Zentimetern erreichen. Außerdem erfährt das in einem Y-Verzweiger geführte Licht an den spitzen Verzweigungsstellen eine starke Streuung.

Um die Herstellungskosten und Faser-Chip-Koppelverluste optischer Mehrfach-Verzweiger verringern zu können, werden in jüngster Zeit Anstrengungen unternommen, optische Verzweiger auf Polymerbasis zu entwickeln. In dem Aufsatz "Optical components in polymers, SPIE Band 2540, Seiten 110-117, 1995, beschreibt W. F. X. Frank ein Verfahren zur Strukturierung von Polymeren mittels Vorprägung und anschließender flächenhafter Bestrahlung der Proben. Allerdings ist es sehr schwer, beim Prägen von Y-förmigen Verzweigerstrukturen die spitzen Verzweigungsstellen abzuformen; deshalb ist es gerade beim Prägeverfahren kaum möglich, Y-Verzweiger ohne Streuverluste herzustellen.

Aus der JP 03 172804 (Patent Abstracts of Japan vol. 015, no. 420 (P-1267) ist ein optischer Verzweiger bekannt, bei dem ein Eingangswellenleiter und zwei Ausgangswellenleiter auf einem Glassubstrat angeordnet sind. Der Eingangswellenleiter und die beiden Ausgangswellenleiter sind optisch über Kopplungsabschnitte, die im gleichen Abstand parallel zueinander angeordnet sind, gekoppelt. Mit diesem optischen Verzweiger kann ein präzises 1:1-Verzweigungsverhältnis erreicht werden.

In der JP 08 086926 (Patent Abstracts of Japan vol. 096, no. 008) ist ein optischer Verzweiger offenbart, der einen Glaswellenleiter mit einem ersten Wellenleiter und zwei zweiten Wellenleitern umfaßt, so dass Licht verzweigt werden kann. Der Verzweigungsabschnitt, der auch die Länge der Koppelstrecke des optischen Verzweigers festlegt, wird durch einen ersten sich verjüngenden Wellenleiter, der sich vom ersten Wellenleiter erstreckt, und zweiten sich verjüngenden Wellenleitern, die sich von den zweiten Wellenleitern erstrecken, gebildet. Im Anschluß an die Koppelstrecke laufen die zweiten Wellenleiter unter einem Verzweigungswinkel auseinander. Allerdings hat der Verzweigungswinkel keinen Einfluß auf die Länge der Koppelstrecke, die lediglich durch den sich verjüngenden Bereich des ersten und der zweiten Lichtwellenleiter gebildet wird.

Der Erfindung liegt daher die Aufgabe zugrunde, einen passiven optischen Verzweiger verfügbar zu machen, bei dem die Länge der Koppelstrecke variabler definiert werden kann.

Dieses technische Problem löst die Erfindung mit den Merkmalen des Anspruchs 1.

Demzufolge wird ein optischer Verzweiger in einem transparenten, strukturierbaren Material - Glas oder Polymer - geschaffen, der einen Eingangswellenleiter und mehrere Ausgangswellenleiter aufweist. Die Ausgangswellenleiter sind im Abstand vom Eingangswellenleiter angeordnet. Der Eingangswellenleiter und die Ausgangswellenleiter verlaufen wenigstens im Bereich der Koppelstrecke geradlinig, um den Prozeß zur Herstellung eines optischen Verzweigers in einem transparenten, strukturierbaren Material vereinfachen zu können. Die Längsachse des Eingangswellenleiters schließt mit der Längsachse jedes Ausgangswellenleiters einen spitzen Winkel αᵢ ein. Der Winkel αᵢ nimmt hierbei mit dem Abstand des jeweiligen i-ten Ausgangswelleneleiters zum Eingangswellenleiter zu, so daß ein in den Eingangswellenleiter eingekoppelter Lichtstrahl über eine Koppelstrecke vorbestimmter Länge (L₃) mit definierter Intensität in die Ausgangswellenleiter überkoppelt.

Streuverluste an spitzen Verzweigungsstellen wie bei den bekannten Y-Verzweigern treten hierbei nicht mehr auf. Da ferner der Winkel αᵢ mit dem Abstand des i-ten Ausgangswellenleiters zum Eingangswellenleiter zunimmt, erfolgt das Überkoppeln von Licht zwischen dem Eingangswellenleiter auf den nächstliegenden Ausgangswellenleiter und von diesem auf den unmittelbar benachbarten Ausgangswellenleiter lediglich über eine vorbestimmte Koppelstrecke. Am Ende der Koppelstrecke weisen die Ausgangswellenleiter einen derart großen Abstand voneinander auf, daß keine Überkopplung mehr stattfindet. Ein weiterer Parameter, mit dem die Koppelstrecke und damit die überkoppelnde Intensität auf die einzelnen Ausgangswellenleiter festgelegt werden kann, ist die Länge Lᵢ, die den Versatz der Ausgangswellenleiter zueinander angibt.

Vorteilhafte Weiterbildungen sind in den Unteransprüchen umschrieben.

Zweckmäßigerweise sind die Eingangs- und Ausgangswellenleiter derart dimensioniert, daß sie nur eine Mode führen können.

Die Erfindung wird nachfolgend beispielhaft anhand einer Ausführungsform in Verbindung mit den beiligenden Zeichnungen näher erläutert.
Es zeigen:
- Fig. 1: einen optischen 1-4-Verzweiger in einem Polymer;
- Fig. 2: die am Ausgang der in Fig. 1 gezeigten Ausgangswellenleiter gemessene, gleichmäßig verteilte Lichtintensität bei einer Wellenlänge von 835 nm, aufgetragen über dem Abstand der Ausgangswellenleiter zueinander;
- Fig. 3: die am Ausgang der in Fig. 1 gezeigten Ausgangswellenleiter gemessene, gleichmäßig verteilte Lichtintensität bei einer Wellenlänge von 1310 nm, aufgetragen über dem Abstand der Ausgangswellenleiter zueinander, und
- Fig. 4: die am Ausgang der in Fig. 1 gezeigten Ausgangswellenleiter gemessene, ungleichmäßig verteilte Lichtintensität bei einer Wellenlänge von 835 nm, aufgetragen über dem Abstand der Ausgangswellenleiter voneinander.

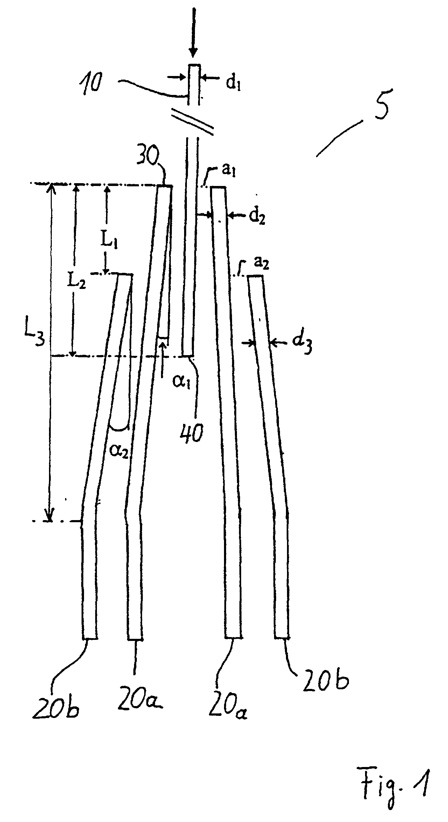

In Fig. 1 ist ein allgemein mit 5 bezeichneter optischer 1-4-Verzweiger dargestellt, der in einem Polymer hergestellt worden ist. Als Polymermaterial kann beispielsweise Poly-Methyl-Meth-Acrylat (PMMA) verwendet werden. Es sind mehrere Herstellungsverfahren bekannt, mit denen wellenleitende Strukturen in einem Polymer hergestellt werden können. Erwähnt sei hier noch einmal das von W. F. X. Frank entwickelte Verfahren zur Vorprägung und anschließenden flächenhaften Bestrahlung des Polymermaterials. Der optische Verzweiger 5 umfaßt einen geraden Eingangswellenleiter 10 sowie vier, symmetrisch um den Eingangswellenleiter 10 angeordnete, wenigstens im Koppelbereich L₃ gerade verlaufende Ausgangswellenleiter 20a und 20b. Das besondere an dem optischen Verzweiger 5 ist darin zu sehen, daß die einzelnen Wellenleiter 10, 20a und 20b im Abstand zueinander angeordnet sind und keine Verzweigungsspitzen wie die bekannten Y-Verzweiger enthalten. Die gerade Struktur der Wellenleiter 10, 20a und 20b erleichtert zudem den Herstellungsprozeß. Es sei angemerkt, daß die Wellenleiter 10, 20a und 20b nicht geradlinig verlaufen müssen, sondern beliebig gekrümmt sein können, sofern dadurch der beabsichtigte Zweck erreicht werden kann. Die Breite d des Eingangswellenleiters 10 sowie die Breite der Ausgangswellenleiter 20a und 20b sind gleich und vorzugsweise so gewählt, daß die einzelnen Wellenleiter 10, 20a und 20b nur eine Mode führen können. Wie Fig. 1 zeigt, sind die einzelnen Ausgangswellenleiter 20a und 20b paarweise und symmetrisch um den Eingangswellenleiter 10 angeordnet. Der Eingangswellenleiter 10 und die Ausgangswellenleiter 20a und 20b sind so eng benachbart angeordnet, daß Licht vom Eingangswellenleiter 10 auf die nächstliegenden Ausgangswellenleiter 20a überkoppeln kann. Die Ausgangswellenleiter 20a und 20b sind wiederum so eng benachbart angeordnet, daß Licht von den Ausgangswellenleitern 20a in die angrenzenden Ausgangswellenleiter 20b überkoppeln kann. Der Abstand der Wellenleiter 10, 20a und 20b hängt mit der Eindringtiefe der evaneszenten Felder in den Wellenleitern zusammen, über die die Wellenleiter 10, 20a und 20b miteinander gekoppelt sind. Die Eindringtiefe ist von der Brechungsindexdifferenz zwischen dem jeweiligen Wellenleiter und seiner Umgebung, von der Wellenlänge sowie vom Modenwinkel abhängig. Die Brechungsindexdifferenz ist im wesentlichen durch das Herstellungsverfahren festgelegt. So erhöht sich der Brechungsindex in einem Polymermaterial (z. B. PMMA) beispielsweise bei UV-Belichtung um etwa 1,5x10⁻³, gemessen bei einer Wellenlänge von 633 nm. In diesem Bereich erhöhten Brechungsindex können die eingekoppelten Lichtwellen mittels Totalreflexion geführt werden.

Die in den Eingangswellenleiter 10 eingekoppelte Lichtintensität kann gezielt auf die Ausgangswellenleiter 20a, 20b verteilt werden. Dazu sind die Winkel αᵢ, die Abstände aᵢ und die Längen Lᵢ entsprechend zu wählen. Der Winkel α₁ ist der Winkel, der von der Längsachse des Eingangswellenleiters 10 und dem i-ten Ausgangswellenleiter 20a bzw. 20b eingeschlossen ist; er nimmt mit dem Abstand des i-ten Ausgangswellenleiters 20a bzw 20b zum Eingangswellenleiter 10 zu, wie dies in Fig. 1 gezeigt ist. Mit anderen Worten ist der Winkel α₁, der von der Längsachse des Eingangswellenleiters 10 und der Längsachse der Ausgangswellenleiter 20a eingeschlossen ist, kleiner als der Winkel α₂, der von der Längsachse des Wellenleiters 10 und der Längsachse der Ausgangswellenleiter 20b eingeschlossen ist. Der Abstand aᵢ ist der Abstand zwischen der eingangsseitigen Stirnfläche 30 eines i-ten Ausgangswellenleiters und dem jeweils benachbarten, in Richtung zum Eingangswellenleiter 10 angeordneten Wellenleiter 20a bzw. 10. Mit anderen Worten entspricht a₂ dem Abstand zwischen der eingangsseitigen Stirnfläche 30 der Ausgangswellenleiter 20b und den Ausgangswellenleitern 20a, wohingegen a₁ dem Abstand zwischen der eingangsseitigen Stirnfläche 30 der Ausgangswellenleiter 20a und dem Eingangswellenleiter 10 entspricht. Die Länge L₁ ist der Abstand zwischen der eingangsseitigen Stirnfläche 30 der Ausgangswellenleiter 20a und der eingangsseitigen Stirnfläche 30 der Ausgangswellenleiter 20b, wohingegen die Länge L₂ der Abstand zwischen der eingangsseitigen Stirnfläche 30 des Ausgangswellenleiters 20a und der ausgangsseitigen Stirnfläche 40 des Eingangswellenleiters 10 ist. An dieser Stelle sei noch erwähnt, daß der Winkel αᵢ, die Länge Lᵢ und der Abstand aᵢ in Abhängigkeit von der Wellenlänge des eingekoppelten Lichtes zu wählen sind. Obwohl in Fig. 1 ein symmetrischer, fächerartiger optischer Verzweiger 5 dargestellt ist, sind beliebige Anordnungen zwischen Eingangswellenleiter 10 und Ausgangswellenleiter 20 denkbar. Die Ausgangswellenleiter 20a und 20b laufen unter den sehr kleinen Winkeln α₁ und α₂ so lange auseinander, bis der Abstand zwischen ihnen groß genug ist, um ein weiteres Überkoppeln von Licht zwischen ihnen auszuschließen. Danach werden die Ausgangswellenleiter 20a und 20b beispielsweise mit einem Radius von etwa 5 cm gekrümmt und anschließend wieder parallel weitergeführt, so daß sie an der ausgangsseitigen Stirnfläche je einen Abstand von etwa 250 µm zueinander aufweisen. Der Bereich von der eingangsseitigen Stirnfläche 30 der innen liegenden Ausgangswellenleiter 20a bis zu der Stelle, an der keine Lichtüberkopplung zwischen den einzelnen Ausgangswellenleitern 20a und 20b mehr erfolgt, wird hierin als Koppelstrecke bezeichnet.

Der in Fig. 1 gezeigte optische Verzweiger 5 kann so dimensioniert werden, daß ein in den Eingangswellenleiter 10 eingekoppelter Lichtstrahl über die Koppelstrecke L₃ vorbestimmter Länge im wesentlichen mit gleicher Intensität in die Ausgangswellenleiter 20a, 20b überkoppelt. In den nachfolgend beschriebenen Beispielen beträgt die Länge L₃ der Koppelstrecke bei einer Wellenlänge des eingekoppelten Lichtes von 835 nm etwa 7,4 mm und bei einer Wellenlänge von 1310 nm etwa 12,5mm. Es sind jedoch auch kürzere Koppelstrecken denkbar.

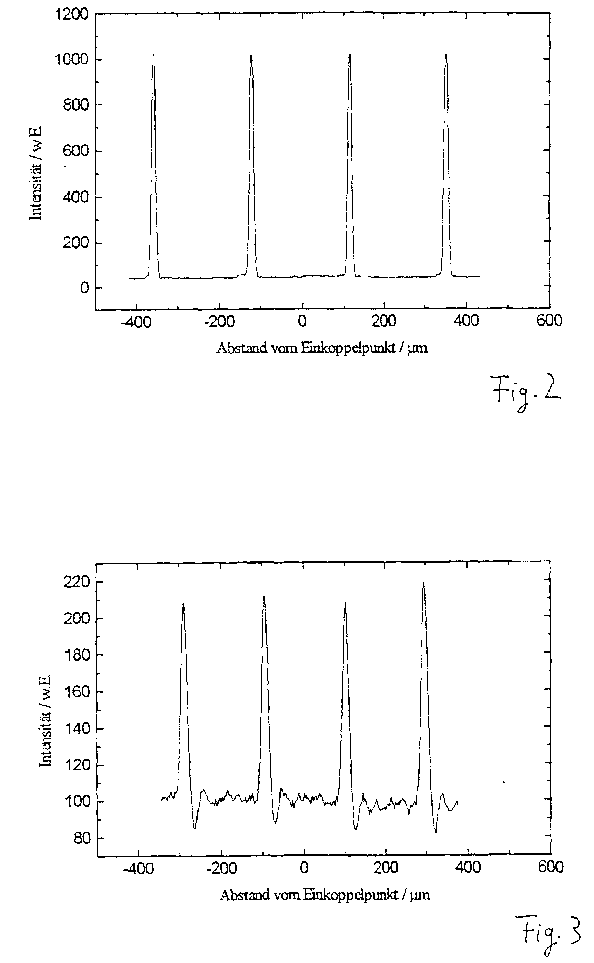

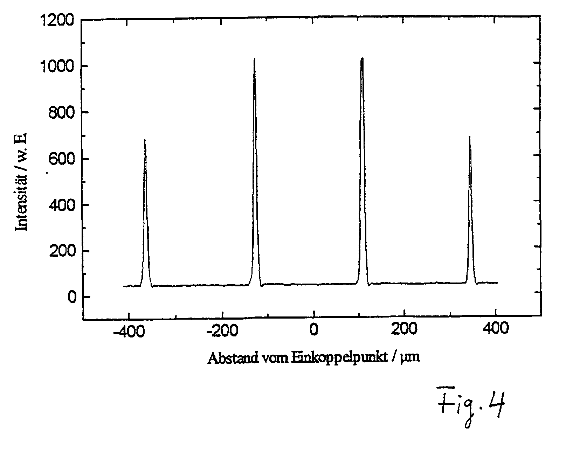

Fig. 2 zeigt ein Diagramm, in dem die am Ausgang der vier Ausgangswellenleiter 20a, 20b (nicht dargestellt) gemessenen Lichtintensitäten bei beliebiger Einheit dargestellt sind. Die Wellenlänge des eingekoppelten Lichtes betrug 835 nm. In Fig. 3 ist ein ähnliches Diagramm dargestellt, in dem die am Ausgang der vier Ausgangswellenleiter 20a und 20b gemessenen Intensitäten dargestellt sind. Die Wellenlänge des in den Eingangswellenleiter 10 eingekoppelten Lichtes betrug 1.310 nm. Die Parameter für den optischen Verzweiger 10, der die in Fig. 2 bzw. in Fig. 3 dargestellte Identitätsverteilung liefert, ist in der folgenden Tabelle angegeben:

| | Wellenleiterbreite | a1 | a2 | α1 | α2 | L1 | L2 |
|---|---|---|---|---|---|---|---|
| 835 nm | 2 µm | 3,3 µm | 3,6 µm | 0,45° | 0,97° | 300 µm | 1000 µm |
| 1310 nm | 4 µm | 6,5 µm | 7,7 µm | 0,25° | 0,49° | 300 µm | 1300 µm |

Wie man aus den Diagrammen nach Fig. 2 und 3 entnehmen kann, beträgt der Abstand der Ausgangswellenleiter 20a und 20b ausgangsseitig etwa 250 µm. Die Breite d₁ des Eingangswellenleiters und die Breite d₂ und d₃ der Ausgangswellenleiter 20a bzw. 20b sind in diesen Beispielen gleich. Es sei noch einmal betont, daß die hier genannten Werte nur beispielhaft gewählt worden sind.

In Fig. 4 ist eine ungleichmäßige Intensitätsverteilung am Ausgang der vier Ausgangswellenleiter 20a, 20b bei einer Wellenlänge von 835 nm dargestellt. In diesem Fall übertragen die inneren Ausgangswellenleiter 20a eine höhere Lichtintensität als die beiden außen liegenden Ausgangswellenleiter 20b. Eine solch ungleichmäßige Intensitätsverteilung kann beispielsweise dann zweckmäßig sein, wenn die Ausgangswellenleiter 20a und 20b unterschiedlich lang ausgebildet sind, am Ausgang aber jeweils die gleiche Lichtleistung liefern sollen. Die Parameter für diesen optischen Verzweiger 5 sind gegeben durch:
Wellenleiterbreite d = 2 µm
Abstand a₁ = 1,0 µm
Abstand a₂ = 1,0 µm
L₁ = 300 µm
L₂ = 600 µm
Winkel α₁ = 1,0°
Winkel α₂ = 1,8°.

Der Abstand der Ausgangswellenleiter 20a, 20b am Ausgang des Verzweigers 5 betrug etwa 250 µm.

Die Wahl der Parameter hängt im wesentlichen vom Brechungsindexverlauf eines Streifenwellenleiters in vertikaler und horizontaler Richtung ab; der Brechungsindexverlauf hängt wiederum vom Herstellungsprozeß ab.
Dank der Erfindung ist es möglich, das in den Eingangswellenleiter 10 eingekoppelte Licht mit einer definierten Intensität auf die Ausgangswellenleiter 20a, 20b zu verteilen. Werden gerade Wellenleiter verwendet, kann auch der Herstellungsprozeß vereinfacht werden.

## Patentansprüche

1. Optischer Verzweiger mit einem transparenten, strukturierbaren Material, insbesondere einem Polymer, mit
einem Eingangswellenleiter (10) und
mehreren Ausgangswellenleitern (20a, 20b), die im Abstand vom Eingangswellenleiter (10) angeordnet sind,
**dadurch gekennzeichnet, daß**
der Verzweiger auf mindestens einer Seite des Eingangswellenleiters (10) zwei oder mehrere Ausgangswellenleiter (20a, 20b) aufweist, daß
der Eingangswellenleiter (10) und die Ausgangswellenleiter (20a, 20b) wenigstens im Bereich der Koppelstrecke geradlinig verlaufen, daß
die Längsachse des Eingangswellenleiters (10) mit der Längsachse jedes Ausgangswellenleiters (20a, 20b) einen spitzen Winkel αᵢ einschließt, und daß
der Winkel αᵢ mit dem Abstand des jeweiligen i-ten Ausgangswelleneleiters (20a, 20b) zum Eingangswellenleiter (10) zunimmt, so daß ein in den Eingangswellenleiter (10) eingekoppelter Lichtstrahl über eine Koppelstrecke vorbestimmter Länge (L₃) mit definierter Intensität in die Ausgangswellenleiter (20a, 20b) überkoppelt.

2. Optischer Wellenleiter nach Anspruch **dadurch gekennzeichnet, daß** die Ausgangswellenleiter (20a, 20b) symmetrisch zum Eingangsleiter (10) und gegeneinander um eine vorbestimmte Länge versetzt angeordnet sind.

3. Optischer Verzweiger nach Anspruch 1 oder 2,
**dadurch gekennzeichnet, daß** der Winkel αᵢ im Bereich von 0,1° bis 3° liegt.

4. Optischer Verzweiger nach einem der Ansprüche 1 bis 3, **dadurch gekennzeichnet, daß** die Dimensionierung des Eingangswellenleiters (10) und der Ausgangswellenleiter (20a, 20b) derart gewählt ist, daß sie nur eine Mode führen.

## Claims

1. Optical splitter with a transparent, structurable material, in particular with a polymer, with
an input waveguide (10) and
a plurality of output waveguides (20a, 20b) which are arranged at a distance from the input waveguide (10),
**characterized in that**
the splitter has two or more output waveguides (20a, 20b) on at least one side of the input waveguide (10), **in that**
the input waveguide (10) and the output waveguides (20a, 20b) extend in a straight line at least in the region of the coupling path, **in that**
the longitudinal axis of the input waveguide (10) makes an acute angle áᵢ with the longitudinal axis of each output waveguide (20a, 20b), and **in that**
the angle áᵢ increases with the distance of the i th output waveguide (20a, 20b) from the input waveguide (10), so that a light beam coupled into the input waveguide (10) is transferred over a coupling path of predetermined length (L₃) with defined intensity into the output waveguides (20a, 20b).

2. Optical splitter according to Claim 1,
**characterized in that** the output waveguides (20a, 20b) are arranged symmetrically with respect to the input waveguide (10) and offset by a predetermined length with respect to one another.

3. Optical splitter according to Claim 1 or 2,
**characterized in that** the angle áᵢ lies in the range of from 0.1° to 3°.

4. Optical splitter according to one of Claims 1 to 3,
**characterized in that** the dimensioning of the input waveguide (10) and of the output waveguides (20a, 20b) is selected in such a way that they carry only one mode.

## Revendications

1. Répartiteur optique avec un matériau transparent pouvant être structuré, en particulier avec un polymère avec
un guide d'ondes d'entrée (10) et
plusieurs guides d'ondes de sortie (20a, 20b), disposés à une distance du guide d'ondes d'entrée (10)
**caractérisé en ce que** le répartiteur présente deux ou plusieurs guides d'ondes de sortie (20a, 20b) sur au moins un côté du guide d'ondes d'entrée (10),
**en ce que** le guide d'ondes d'entrée (10) et les guides d'ondes de sortie (20a, 20b) circulent de manière rectiligne au moins dans la zone du couplage,
**en ce que** l'axe longitudinal du guide d'ondes d'entrée (10) définit avec l'axe longitudinal correspondant de chaque guide d'ondes de sortie (20a, 20b) un angle aigu αᵢ,
et **en ce que** l'angle αᵢ augmente avec la distance de l'i-ième guide d'ondes de sortie (20a, 20b) au guide d'ondes d'entrée (10), de manière à transférer avec une intensité définie, un rayon lumineux se trouvant à l'intérieur du guide d'ondes d'entrée (10) vers les guides d'ondes de sortie (20a, 20b) à travers une zone de couplage de longueur prédéfinie (L₃).

2. Guide d'ondes optique selon la revendication, **caractérisé en ce que** les guides d'ondes de sortie (20a, 20b) sont symétriques par rapport au guide d'ondes d'entrée (10) et sont disposés de manière décalée d'une longueur prédéfinie les uns par rapport aux autres.

3. Répartiteur optique selon la revendication 1 ou 2, **caractérisé en ce que** l'angle αᵢ se situe dans une plage de 0,1° à 3°.

4. Répartiteur optique selon l'une des revendications 1 à 3, **caractérisé en ce que** le dimensionnement du guide d'ondes d'entrée (10) et des guides d'ondes de sortie (20a, 20b) est choisi de manière à ne guider qu'un seul mode.
